# EUROPÄISCHE PATENTSCHRIFT

(11) **EP 3 178 308 B1**
(45) Veröffentlichungstag und Bekanntmachung des Hinweises auf die Patenterteilung: **29.01.2020**
(21) Anmeldenummer: 16201676.0
(22) Anmeldetag: 01.12.2016
(51) Int. Cl.: A01D 43/08

(54) **MÄH- UND EINZUGSEINRICHTUNG FÜR EINE MASCHINE ZUM MÄHEN VON STÄNGELARTIGEM ERNTEGUT**
MOWING AND COLLECTION DEVICE FOR A MACHINE FOR MOWING STALK-LIKE CROPS
FAUCHEUSE-RÉCOLTEUSE POUR UNE FAUCHEUSE DE PRODUITS AGRICOLES EN FORME DE TIGES

(30) Priorität: 08.12.2015 DE 102015224564
(43) Veröffentlichungstag der Anmeldung: 14.06.2017
(73) Patentinhaber: Deere & Company, Moline, IL 61265 (US)
(72) Erfinder: Effsing, Jürgen, 48683 Ahaus (DE); Hungerhoff, Bernd-Clint, 46325 Borken (DE); Hüning, Martin, 48727 Billerbeck (DE); Steggemann, Frank, 46354 Südlohn (DE)
(74) Vertreter: Holst, Sönke

(56) Entgegenhaltungen:
- EP-A1- 2 401 907
- DE-A1- 4 441 074
- DE-A1- 19 615 882
- DE-U1- 20 317 022
- DE-U1- 29 518 742

## Beschreibung

Die Erfindung betrifft eine Mäh- und Einzugseinrichtung für eine Maschine zum Mähen von stängelartigem Erntegut, umfassend:
ein unteres Schneidelement zum Abschneiden von Pflanzenstängeln,
einen oberhalb des Schneidelements angeordneten, ersten Förderer, welcher in einer Förderrichtung antreibbar ist und nach außen ragende Mitnehmer umfasst, zwischen denen Aussparungen zur Aufnahme von Pflanzenstängeln gebildet sind,
und einen oberhalb des ersten Förderers angeordneten, zweiten Förderer, welcher gemeinsam mit dem ersten Förderer in der Förderrichtung antreibbar ist und nach außen ragende Mitnehmer umfasst, zwischen denen Aussparungen zur Aufnahme von Pflanzenstängeln gebildet sind,
wobei die nachlaufenden Flanken der Mitnehmer des zweiten Förderers mit je einem vorspringenden Halteelement für Pflanzenstängel versehen sind und die nachlaufenden Flanken der Mitnehmer des ersten Förderers jeweils mit einem vorspringenden Halteelement für Pflanzenstängel versehen sind, sowie eine entsprechende Maschine.

### Stand der Technik

Mäh- und Einzugseinrichtungen der eingangs erwähnten Art dienen insbesondere zur Maisernte. Die Pflanzen werden durch die Mäh- und Einzugseinrichtungen einerseits von ihren Wurzeln getrennt und andererseits erfasst und abgefördert. Diese Mäh- und Einzugseinrichtungen umfassen untere Schneidscheiben zum Abschneiden der Pflanzen und darüber angeordnete Förderscheiben mit um ihren Rand verteilten Aussparungen zur Aufnahme von Pflanzenstängeln. Es ist eine gewisse Anzahl an Förderscheiben übereinander angeordnet, üblicherweise drei oder vier.

Gemäß der EP 0 099 527 A2 sind oberhalb einer rotierenden, die Pflanzenstängel im freien Schnitt vom Stumpf abtrennenden Schneidscheibe drei Zahnkränze angeordnet. Die langsamer als die Schneidscheibe rotierenden Zahnkränze drehen sich in dieselbe Richtung wie die Schneidscheibe. Die beiden oberen Zahnkränze haben gleiche Teilungen und einen Zahngrund, der etwa dem Durchmesser der Pflanzenstängel entspricht. Der dritte, untere Zahnkranz weist demgegenüber eine geringere Anzahl von längeren, über den Umfang der oberen Zahnkränze nach außen stehenden Greifzähnen auf. Die Pflanzen werden im Betrieb durch die vorlaufende Kante eines Greifzahnes des unteren Zahnkranzes erfasst, durch einen an der Rückseite von einem rückwärtig an einem Halmteiler befestigten Einweiserfinger nach innen gedrückt und gelangen in den Zahngrund der oberen Zahnkränze. Somit wird üblicherweise nur jeder zweite Zahngrund der oberen Zahnkränze mit einem Pflanzenstängel belegt, was die Förderkapazität der Mäh- und Einzugseinrichtung begrenzt.

Die DE 44 41 074 A1 zeigt eine andere Mäh- und Einzugseinrichtung mit einer unteren Schneidscheibe und zwei darüber angeordneten Förderscheiben. Letztere weisen um den Umfang verteilte, etwa U-förmige Aussparungen auf, die an den vor- und nachlaufenden, äußeren Enden jeweils nach innen gerichtete Haken bilden. Die zwischen den Aussparungen liegenden Umfangsflächen sind entgegen der Drehrichtung nach innen geneigt. Hier findet jeweils eine Pflanze Platz in einer Aussparung.

In der DE 196 15 882 A1 wird eine ähnliche Mäh- und Einzugseinrichtung wie in DE 44 41 074 A1 gezeigt, jedoch sind an der nicht-fördernden, in Drehrichtung vorlaufenden Flanke der unteren Förderscheibe zwei gekrümmte Haltekammern für Pflanzen ausgebildet.

Die DE 203 17 022 U1 zeigt eine Mäh- und Einzugseinrichtung mit Kettenförderern. Oberhalb einer stationären Gegenschneide sind (erste) hakenartige Mitnehmer angeordnet, welche die Pflanzenstängel erfassen und nach hinten und innen ziehen, sodass sie durch die Gegenschneide abgeschnitten werden. Oberhalb der hakenartigen Mitnehmer sind zwei Reihen weiterer Mitnehmer angeordnet, von denen die unteren (zweiten) etwa geradlinig nach außen verlaufen und einen verbreiterten Kopf aufweisen, sodass sich an den ansonsten etwa geradlinig verlaufenden, vor- und nachlaufenden Flanken jeweils Vorsprünge ergeben. Die obersten (dritten) Mitnehmer weisen in die Bewegungsrichtung gekrümmte vor- und nachlaufende Flanken auf und laufen nach außen spitz zu. Es sind an einem Kettenglied jeweils zwei dritte und zweite Mitnehmer und ein erster Mitnehmer angebracht. Diese Anordnung ist somit vergleichbar mit jener nach EP 0 092 527 A2.

Die DE 295 18 742 U1 zeigt schließlich eine gattungsgemäße Maschine, bei der oberhalb einer Schneidscheibe zwei Förderscheiben übereinander angeordnet sind. Die Förderscheiben umfassen in Drehrichtung geringfügig gegeneinander versetzte, U-förmige Aussparungen zur Aufnahme von Pflanzenstängeln, die an ihren nachlaufenden Flanken mit hakenförmigen Vorsprüngen versehen sind. An den jeweils übereinander angeordneten Vorsprüngen eines Paars übereinander angeordneter Aussparungen kann jeweils nur ein Pflanzenstängel gehalten werden.

### Aufgabe

Die der Erfindung zu Grunde liegende Aufgabe wird darin gesehen, eine gegenüber dem Stand der Technik verbesserte Mäh- und Einzugseinrichtung für eine Maschine zum Mähen von stängelartigem Erntegut und eine entsprechende Maschine bereitzustellen.

### Lösung

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Eine Mäh- und Einzugseinrichtung für eine Maschine zum Mähen von stängelartigem Erntegut umfasst ein unteres Schneidelement zum Abschneiden von Pflanzenstängeln, einen oberhalb des Schneidelements angeordneten, ersten Förderer, welcher in einer Förderrichtung antreibbar ist und nach außen ragende Mitnehmer umfasst, zwischen denen Aussparungen zur Aufnahme von Pflanzenstängeln gebildet sind und einen oberhalb des ersten Förderers angeordneten, zweiten Förderer, welcher gemeinsam mit dem ersten Förderer in der Förderrichtung antreibbar ist und nach außen ragende Mitnehmer umfasst, zwischen denen Aussparungen zur Aufnahme von Pflanzenstängeln gebildet sind. Die nachlaufenden Flanken der Mitnehmer des zweiten Förderers sind mit je einem vorspringenden Halteelement für Pflanzenstängel versehen und die nachlaufenden Flanken der Mitnehmer des ersten Förderers sind jeweils mit einem vorspringenden Halteelement für Pflanzenstängel versehen. Die Mitnehmer des zweiten Förderers befinden sich jeweils zumindest etwa mittig oberhalb der in Förderrichtung betrachteten Abmessung einer Aussparung des ersten Förderers. Oberhalb des zweiten Förderers ist ein dritter Förderer angeordnet, welcher in der Förderrichtung antreibbar ist und nach außen ragende Mitnehmer umfasst, zwischen denen Aussparungen zur Aufnahme von Pflanzenstängeln gebildet sind, wobei sich jeweils ein Mitnehmer des dritten Förderers in vertikaler Richtung betrachtet etwa mittig oberhalb eines Mitnehmers des zweiten Förderers und alternierend dazu ein anderer Mitnehmer des dritten Förderers in vertikaler Richtung betrachtet etwa mittig oberhalb eines Mitnehmers des ersten Förderers befinden.

Dadurch wird es möglich, zwei Pflanzenstängel in einer Aussparung des ersten Förderers aufzunehmen, wobei ein Pflanzenstängel mit dem Halteelement des ersten Förderers und der andere Pflanzenstängel in Förderrichtung versetzt mit dem Halteelement des zweiten Förderers zusammenwirkt.

Die Mitnehmer des ersten Förderers können sich über das Schneidelement und den zweiten Förderer nach außen erstrecken und eine in Förderrichtung nach vorn geneigte, vorlaufende Flanke umfassen. Zudem sind die Mitnehmer des ersten Förderers am äußeren Ende vorzugsweise nach unten abgewinkelt.

Insbesondere ist das Schneidelement in Förderrichtung antreibbar, und zwar vorzugsweise mit höherer Geschwindigkeit als die Förderer. Alternativ könnte das Schneidelement feststehen und der erste Förderer als bewegliche Gegenschneide wirken, oder das Schneidelement entgegen der Förderrichtung angetrieben werden.

Schließlich können die Förderer und das Schneidelement rotativ antreibbar sein. Alternativ können die Förderer als Band- oder Kettenförderer ausgebildet sein.

### Ausführungsbeispiel

In den Zeichnungen ist ein nachfolgend näher beschriebenes Ausführungsbeispiel der Erfindung dargestellt. Es zeigt:
- Fig. 1: eine perspektivische Ansicht einer Maschine zum Mähen von stängelartigem Erntegut,
- Fig. 2: eine perspektivische Ansicht einer Mäh- und Einzugseinrichtung der Maschine der Figur 1, und
- Fig. 3: einen vergrößerten Ausschnitt der Figur 2.

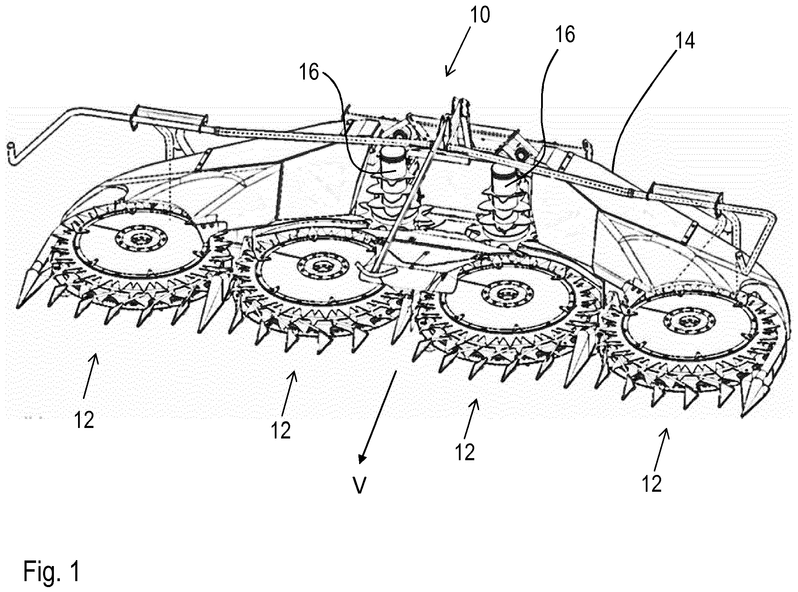

Die Figur 1 zeigt eine Draufsicht auf eine Maschine 10 zum Mähen von stängelartigem Erntegut. Sie umfasst einen Tragrahmen 14, der für den Erntebetrieb an einem Einzugskanal eines Feldhäckslers (nicht gezeigt) befestigt wird, der die Maschine 10 in einer Vorwärtsrichtung V über ein Feld bewegt. Die Maschine 10 umfasst in der dargestellten Ausführungsform insgesamt vier Mäh- und Einzugseinrichtungen 12, welche die auf dem Feld stehenden Pflanzen abschneiden und abfördern. Der Quertransport der Pflanzen erfolgt durch die Rückseiten der Mäh- und Einzugseinrichtungen 12 und schließlich werden die Pflanzen durch Abgabefördertrommeln 16 nach hinten in den Einzugskanal 12 umgelenkt. Die Maschine 10 könnte eine größere oder kleinere Anzahl an Mäh- und Einzugseinrichtungen 16 umfassen, deren Durchmesser (hier ca. 1,5 m entsprechend dem Doppelten eines üblichen Reihenabstandes) auch kleiner als dargestellt sein könnte. Zudem kann der Quertransport durch Querfördertrommeln (nicht gezeigt, vgl. EP 0 760 200 A1) erfolgen.

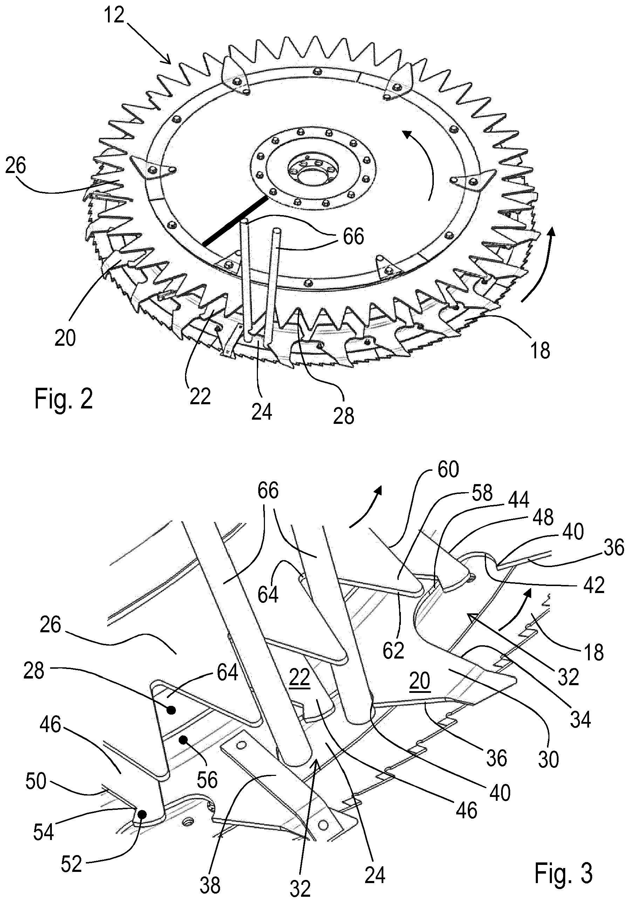

Die Figur 2 zeigt eine der Mäh- und Einzugseinrichtungen 12. Sie umfasst ein unteres Schneidelement 18, das sich aus einzelnen, gezahnten Segmenten zusammensetzt, die an einer mittigen Halterscheibe 24 befestigt sind. Oberhalb des Schneidelements 18 befindet sich ein erster Förderer 20. Oberhalb des ersten Förderers 20 befindet sich ein zweiter Förderer 22 und darüber ein dritter Förderer 26. Die drei Förderer 20, 22, 26 sind koaxial zueinander angeordnet und aneinander fixiert, z.B. durch eine konzentrische Trommel 28. Durch ein nicht gezeigtes Getriebe (vgl. jedoch EP 0 099 527 A1 und EP 0 760 200 A1) werden die Trommel 28 mit den Förderern 20, 22, 26 und das Schneidelement 18 für den Erntebetrieb in Rotation versetzt, wobei die Drehzahl des Schneidelements 18 wesentlich größer als die der Trommel 28 ist.

Der Aufbau der Förderer 20, 22, 26 ist anhand der Figur 3 im Detail erkennbar.

Der erste Förderer 20 umfasst nach außen ragende Mitnehmer 30, zwischen denen Aussparungen 32 zur Aufnahme von Pflanzenstängeln gebildet sind. Die Mitnehmer 30 erstrecken sich nach außen und bilden eine vorlaufende Flanke 34 und eine nachlaufende Flanke 36. Zwischen einer nachlaufenden Flanke 36 und der derselben Aussparung 32 zugehörigen, vorlaufenden Flanke 34 befindet sich die eigentliche Aussparung 32, die in Umfangsrichtung relativ langgestreckt ist. Die vorlaufende Flanke 34 ist im inneren Bereich etwa radial orientiert und im äußeren Bereich gegenüber der Radialen nach vorn abgewinkelt. Außerdem ist der Mitnehmer 30 im äußeren Bereich nach unten abgewinkelt oder gekröpft. Die nachlaufende Flanke 36 ist im äußeren Bereich etwa radial orientiert und im inneren Bereich gegenüber der Radialen nach vorn abgewinkelt, bis zu einem vorspringenden, nasenartigen Halteelement 40 hin, an das sich nach innen hin eine halbkreisförmige Einbuchtung 42 anschließt, der in Umfangsrichtung der tangentiale Boden 44 der Aussparung 32 folgt, an die sich entgegen der Drehrichtung eine viertelkreisförmige Biegung anschließt, der wiederum der innere, radial orientierte Bereich der vorlaufenden Flanke 34 folgt. Die die Flanken 34, 36 verbindende, äußere Kante des ersten Förderers 20 ist gegenüber der Radialen nach vorn abgewinkelt. Die Mitnehmer 30 des ersten Förderers 20 werden üblicherweise auch als Adlernase bezeichnet. An einigen Mitnehmern 30 des ersten Förderers 20 sind Räumer 38 angebracht.

Der zweite Förderer 22 weist ebenfalls um seinen Umfang verteilte Mitnehmer 46 auf, deren vorlaufenden Flanken 48 gegenüber der Radialen nach hinten abgewinkelt sind, während die nachlaufenden Flanken 50 gegenüber der Radialen nach vorn abgewinkelt sind. Am äußeren Ende bilden die nachlaufenden Flanken 50 der Mitnehmer 46 des zweiten Förderers 22 ein vorspringendes Halteelement 52, d.h. die nachlaufende Flanke 50 ist dort gegenüber der Radialen nach hinten abgewinkelt. Es ergibt sich somit eine Einbuchtung 54 in der nachlaufenden Flanke 50. Die Anzahl der Mitnehmer 46 des zweiten Förderers 22 entspricht der Anzahl der Mitnehmer 30 des ersten Förderers 20. Es verbleiben somit zwischen zwei benachbarten Mitnehmern 46 des zweiten Förderers 22 relativ große Aussparungen 56. Die Mit Mitnehmer 46 des zweiten Förderers 22 sind gegenüber den Mitnehmern 30 des ersten Förderers 20 jedoch im Umfangsrichtung versetzt, sodass die Mitnehmer 46 in vertikaler Richtung betrachtet jeweils etwa mittig genau oberhalb der Aussparungen 32 positioniert sind.

Der dritte Förderer 26 weist ebenfalls um seinen Umfang verteilte Mitnehmer 58 auf, deren vorlaufenden Flanken 60 gegenüber der Radialen nach hinten abgewinkelt sind, während die nachlaufenden Flanken 62 gegenüber der Radialen nach vorn abgewinkelt sind. Die Mitnehmer 58 des dritten Förderers 26 sind somit zahnförmig. Ihre Anzahl entspricht dem Doppelten der Anzahlen der Mitnehmer 30 und dem Doppelten der Anzahlen der Mitnehmer 46. Zwischen benachbarten Mitnehmern 46 ist jeweils eine Aussparung 64 gebildet.

Jeweils ein Mitnehmer 58 ist in vertikaler Richtung betrachtet jeweils etwa mittig genau oberhalb einem Mitnehmer 30 und jeweils ein Mitnehmer 58 ist in vertikaler Richtung betrachtet jeweils etwa mittig genau oberhalb einem Mitnehmer 46 angebracht. Der Hüllkreisdurchmesser der Mitnehmer 46 und 58 ist etwa gleich und etwas kleiner als der Hüllkreisdurchmesser des Schneidelements 18, der wiederum kleiner als der Hüllkreisdurchmesser der Mitnehmer 30 ist.

Beim Betrieb ergibt sich die in den Figuren 2 und 3 gezeigte Wirkungsweise: Auf einem Feld stehende Pflanzenstängel 66 werden durch das Schneidelement 18 im freien Schnitt von dem im Boden verbleibenden Stümpfen abgeschnitten. Durch die Drehung des Schneidelements 18 und ihrer Halterscheibe 24, auf welcher sich die Schnittflächen der Pflanzenstängel 66 abstützen, werden die Pflanzenstängel 66 schneller in der Drehrichtung bewegt als sich die Förderer 20, 22 und 26 drehen. Durch die Vorschubbewegung der Maschine 10 (und somit der Mäh- und Einzugseinrichtung 16) und nachfolgende Pflanzenstängel 66 werden die Pflanzenstängel 66 nach hinten und somit in Richtung auf die Drehachse der Förderer 20, 22 und 26 geschoben. Die Pflanzenstängel 66 gelangen auf diese Weise entweder in eine erste Haltekammer, die durch die halbkreisförmige Einbuchtung 42 der Aussparung 32 des ersten Förderers 20 und die darüber angeordnete Aussparung 64 des dritten Förderers 26 gebildet wird, oder in eine gegenüber der ersten Haltekammer im Umfangsrichtung versetzte, zweite Haltekammer, die durch die viertelkreisförmige Biegung an der vorlaufenden Flanke 34 des Mitnehmers 30 des ersten Förderers 20, die Einbuchtung 54 in der nachlaufenden Flanke 50 des Mitnehmers 46 des zweiten Förderers 22 und die Aussparung 64 des dritten Förderers 26 gebildet wird. Somit erhält man eine problemlose Abförderung der Pflanzenstängel 66 bei hoher Förderleistung.

## Patentansprüche

1. Mäh- und Einzugseinrichtung (16) für eine Maschine (10) zum Mähen von stängelartigem Erntegut, umfassend:
ein unteres Schneidelement (18) zum Abschneiden von Pflanzenstängeln (66),
einen oberhalb des Schneidelements (18) angeordneten, ersten Förderer (20), welcher in einer Förderrichtung antreibbar ist und nach außen ragende Mitnehmer (30) umfasst, zwischen denen Aussparungen (32) zur Aufnahme von Pflanzenstängeln (66) gebildet sind,
und einen oberhalb des ersten Förderers (20) angeordneten, zweiten Förderer (22), welcher gemeinsam mit dem ersten Förderer (20) in der Förderrichtung antreibbar ist und nach außen ragende Mitnehmer (30) umfasst, zwischen denen Aussparungen (56) zur Aufnahme von Pflanzenstängeln (66) gebildet sind,
wobei die nachlaufenden Flanken (50) der Mitnehmer (46) des zweiten Förderers (22) mit je einem vorspringenden Halteelement (52) für Pflanzenstängel (66) versehen sind und die nachlaufenden Flanken (36) der Mitnehmer (30) des ersten Förderers (20) jeweils mit einem vorspringenden Halteelement (40) für Pflanzenstängel (66) versehen sind,
**dadurch gekennzeichnet, dass** die Mitnehmer (30) des zweiten Förderers (22) sich jeweils zumindest etwa mittig oberhalb der in Förderrichtung betrachteten Abmessung einer Aussparung (32) des ersten Förderers (20) befinden,
und dass oberhalb des zweiten Förderers (22) ein dritter Förderer (26) angeordnet ist, welcher in der Förderrichtung antreibbar ist und nach außen ragende Mitnehmer (58) umfasst, zwischen denen Aussparungen (64) zur Aufnahme von Pflanzenstängeln (66) gebildet sind, wobei sich jeweils ein Mitnehmer (58) des dritten Förderers (26) in vertikaler Richtung betrachtet etwa mittig oberhalb eines Mitnehmers (46) des zweiten Förderers (22) und alternierend dazu ein anderer Mitnehmer (58) des dritten Förderers (26) in vertikaler Richtung betrachtet etwa mittig oberhalb eines Mitnehmers (30) des ersten Förderers (20) befinden,
was es ermöglicht, zwei Pflanzenstängel (66) in einer Aussparung (32) des ersten Förderers (20) aufzunehmen, wobei ein Pflanzenstängel (66) mit dem Halteelement (40) des ersten Förderers (20) und der andere Pflanzenstängel (66) in Förderrichtung versetzt mit dem Halteelement (52) des zweiten Förderers (22) zusammenwirkt.

2. Mäh- und Einzugseinrichtung (16) nach Anspruch 1, wobei die Mitnehmer (30) des ersten Förderers (20) sich über das Schneidelement (18) und den zweiten Förderer (20) nach außen erstrecken und eine in Förderrichtung nach vorn geneigte, vorlaufende Flanke (34) umfassen.

3. Mäh- und Einzugseinrichtung (16) nach einem der vorhergehenden Ansprüche, wobei die Mitnehmer (30) des ersten Förderers (20) am äußeren Ende nach unten abgewinkelt sind.

4. Mäh- und Einzugseinrichtung (16) nach einem der vorhergehenden Ansprüche, wobei das Schneidelement (18) in Förderrichtung antreibbar ist.

5. Mäh- und Einzugseinrichtung (16) nach einem der vorhergehenden Ansprüche, wobei das Schneidelement (18) mit höherer Geschwindigkeit als der erste und zweite Förderer (20, 22) in Förderrichtung antreibbar ist.

6. Mäh- und Einzugseinrichtung (16) nach einem der vorhergehenden Ansprüche, wobei die Förderer (20, 22, 26) und das Schneidelement (18) rotativ antreibbar sind.

7. Maschine (10) zum Mähen von stängelartigem Erntegut mit einer Mäh- und Einzugseinrichtung (16) nach einem der vorhergehenden Ansprüche.

## Claims

1. Mowing and collection device (16) for a machine (10) for mowing stalk-like crops, comprising:
a lower cutting element (18) for cutting off plant stalks (66),
a first conveyor (20) arranged above the cutting element (18), which can be driven in a conveying direction and comprises outwardly projecting drivers (30), between which recesses (32) for receiving plant stalks (66) are formed,
and a second conveyor (22) arranged above the first conveyor (20), which, together with the first conveyor (20), can be driven in the conveying direction and comprises outwardly projecting drivers (30), between which recesses (56) for receiving plant stalks (66) are formed,
wherein the trailing flanks (50) of the drivers (46) of the second conveyor (22) are each provided with a protruding holding element (52) for plant stalks (66), and the trailing flanks (36) of the drivers (30) of the first conveyor (20) are each provided with a protruding holding element (40) for plant stalks (66),
**characterized in that** the drivers (30) of the second conveyor (22) are each located at least approximately centrally above the dimension of a recess (32) of the first conveyor (20), viewed in the conveying direction,
and **in that** a third conveyor (26) is arranged above the second conveyor (22), which can be driven in the conveying direction and comprises outwardly projecting drivers (58), between which recesses (64) for receiving plant stalks (66) are formed, wherein a respective driver (58) of the third conveyor (26), viewed in the vertical direction, is located approximately centrally above a driver (46) of the second conveyor (22) and, alternating therewith, another driver (58) of the third conveyor (26), viewed in the vertical direction, is located approximately centrally above a driver (30) of the first conveyor (20),
which makes it possible to receive two plant stalks (66) in a recess (32) of the first conveyor (20), wherein a plant stalk (66) interacts with the holding element (40) of the first conveyor (20), and the other plant stalk (66), offset in the conveying direction, interacts with the holding element (52) of the second conveyor (22).

2. Mowing and collection device (16) according to Claim 1, wherein the drivers (30) of the first conveyor (20) extend outwards above the cutting element (18) and the second conveyor (20) and comprise a leading flank (34) inclined forward in the conveying direction.

3. Mowing and collection device (16) according to one of the preceding claims, wherein the drivers (30) of the first conveyor (20) are angled over downward at the outer end.

4. Mowing and collection device (16) according to one of the preceding claims, wherein the cutting element (18) can be driven in the conveying direction.

5. Mowing and collection device (16) according to one of the preceding claims, wherein the cutting element (18) can be driven in the conveying direction at a higher speed than the first and second conveyor (20, 22).

6. Mowing and collection device (16) according to one of the preceding claims, wherein the conveyors (20, 22, 26) and the cutting element (18) can be driven in rotation.

7. Machine (10) for mowing stalk-like crops, having a mowing and collection device (16) according to one of the preceding claims.

## Revendications

1. Dispositif de fauchage et de ramassage (16) destiné à une machine (10) de fauchage de produit de récolte en forme de tige, le dispositif comprenant :
un élément de coupe inférieur (18) destiné à couper des tiges de plantes (66),
un premier convoyeur (20) disposé au-dessus de l'élément de coupe (18) et pouvant être entraîné dans une direction de transport et comprenant des entraîneurs (30) saillant vers l'extérieur entre lesquels sont ménagés des évidements (32) destinés à recevoir des tiges de plantes (66),
et un deuxième convoyeur (22) disposé au-dessus du premier convoyeur (20) et pouvant être entraîné conjointement avec le premier convoyeur (20) dans la direction de transport et comprenant des entraîneurs (30) saillant vers l'extérieur entre lesquels sont ménagés des évidements (56) destinés à recevoir des tiges de plantes (66),
les flancs arrière (50) des entraîneurs (46) du deuxième convoyeur (22) étant chacun pourvus d'un élément de retenue saillant (52) destiné aux tiges de plantes (66) et les flancs arrière (36) des entraîneurs (30) du premier convoyeur (20) étant chacun pourvus d'un élément de retenue saillant (40) destiné aux tiges de plantes (66),
**caractérisé en ce que** les entraîneurs (30) du deuxième convoyeur (22) sont situés chacun au moins à peu près au centre au-dessus de la dimension d'un évidement (32) du premier convoyeur (20) par référence au sens de transport,
et **en ce qu'**au-dessus du deuxième convoyeur (22) est disposé un troisième convoyeur (26) qui peut être entraîné dans le sens de transport et qui comprend des entraîneurs (58) saillant vers l'extérieur entre lesquels sont ménagés des évidements (64) destinés à recevoir des tiges de plantes (66), chaque entraîneur (58) du troisième convoyeur (26) étant situé, par référence à la direction verticale, à peu près au centre au-dessus d'un entraîneur (46) du deuxième convoyeur (22) et alternativement un autre entraîneur (58) du troisième convoyeur (26) étant situé, par référence à la direction verticale, à peu près au centre au-dessus d'un entraîneur (30) du premier convoyeur (20),
ce qui permet de recevoir deux tiges de plantes (66) dans un évidement (32) du premier convoyeur (20), une tige de plante (66) coopérant avec l'élément de retenue (40) du premier convoyeur (20) et l'autre tige de plante (66) coopérant avec un décalage dans le sens de transport avec l'élément de retenue (52) du deuxième convoyeur (22).

2. Dispositif de fauchage et de ramassage (16) selon la revendication 1, les entraîneurs (30) du premier convoyeur (20) s'étendant vers l'extérieur au-delà de l'élément de coupe (18) et du deuxième convoyeur (20) et comprenant un flanc avant (34) incliné vers l'avant dans le sens de transport.

3. Dispositif de fauchage et de ramassage (16) selon l'une des revendications précédentes, les entraîneurs (30) du premier convoyeur (20) étant coudés vers le bas à l'extrémité extérieure.

4. Dispositif de fauchage et de ramassage (16) selon l'une des revendications précédentes, l'élément de coupe (18) pouvant être entraîné dans le sens de transport.

5. Dispositif de fauchage et de ramassage (16) selon l'une des revendications précédentes, l'élément de coupe (18) pouvant être entraîné dans le sens de transport à une vitesse supérieure à celle des premier et deuxième convoyeurs (20, 22).

6. Dispositif de fauchage et de ramassage (16) selon l'une des revendications précédentes, le convoyeur (20, 22, 26) et l'élément de coupe (18) pouvant être entraînés en rotation.

7. Machine (10) de fauchage d'un produit de récolte en forme de tige, la machine comprenant un dispositif de fauchage et de ramassage (16) selon l'une des revendications précédentes.
